# EUROPÄISCHE PATENTSCHRIFT

(11) **EP 1 622 707 B1**
(45) Veröffentlichungstag und Bekanntmachung des Hinweises auf die Patenterteilung: **03.09.2008**
(21) Anmeldenummer: 04732070.0
(22) Anmeldetag: 11.05.2004
(51) Int. Cl.: B01F 13/10, B01F 15/02, G01G 19/22, G01F 22/00, B01F 15/00, B65B 1/32, B65B 7/00

(54) **VORRICHTUNG ZUM DOSIEREN UND MISCHEN PULVERFÖRMIGER MATERIALIEN**
DEVICE FOR DOSING AND MIXING POWDERY MATERIALS
DISPOSITIF POUR DOSER ET MELANGER DE MATIERES PULVERULENTES

(30) Priorität: 12.05.2003 AT 7222003; 19.03.2004 AT 4862004
(43) Veröffentlichungstag der Anmeldung: 08.02.2006
(73) Patentinhaber: Steinwald, Kurt, 3100 St. Pölten (AT)
(72) Erfinder: Steinwald, Kurt, 3100 St. Pölten (AT)
(74) Vertreter: Sonn & Partner Patentanwälte
(86) Internationale Anmeldenummer: PCT/AT2004/000165
(87) Internationale Veröffentlichungsnummer: WO 2004/098763

(56) Entgegenhaltungen:
- EP-A- 0 170 322
- EP-A- 0 499 573
- CH-A- 330 809
- DE-A- 1 573 126
- DE-A- 2 131 600
- DE-A- 3 036 968
- DE-A- 19 728 624
- US-A- 5 527 107
- US-A- 5 627 346
- PATENT ABSTRACTS OF JAPAN Bd. 013, Nr. 388 (C-630), 28. August 1989 (1989-08-28) -& JP 01 137963 A (NIPPON HAIGOU SHIRYO KK; others: 01), 30. Mai 1989 (1989-05-30)

## Beschreibung

Die Erfindung betrifft eine Vorrichtung zum Dosieren und Mischen pulverförmiger Materialien, mit im Wesentlichen horizontal nebeneinander angeordneten Vorratsbehältern für die Ausgangsmaterialien mit einer Verschluss- und Dosierklappe oder dergl. an der Unterseite, und mit Dosiereinrichtungen zum Dosieren der Materialien, und mit zumindest einer Mischeinrichtung zum Mischen der dosierten Materialien, wobei unterhalb der Vorratsbehälter zumindest ein Chargenbehälter mit einem Deckel an der Oberseite zur Aufnahme dosierter Mengen an Ausgangsmaterialien bewegbar angeordnet ist.

In vielen Industriebereichen, beispielsweise der Baustoffindustrie, der chemischen Industrie, der Futtermittelindustrie aber auch der Lebensmittelindustrie und pharmazeutischen Industrie, ist es notwendig, zum Erhalt eines Zwischenprodukts oder Endprodukts pulverförmige Materialien in mehr oder weniger genau dosierten Mengen zu mischen. Beispielsweise werden in der Baustoffindustrie zur Herstellung von Klebern oder dergl. die jeweiligen pulverförmigen Bestandteile und Additive vermischt und in Säcken abgefüllt. Je nach Art des Klebers oder der Ausgleichsmasse sind verschiedene Mischverhältnisse notwendig. Zu diesem Zweck werden üblicherweise alle möglichen Ausgangsmaterialien in entsprechenden Behältern zur Verfügung gestellt. Die Größe der jeweiligen Behälter hängt dabei mit der üblichen Dosierung des Ausgangsmaterials zusammen. So werden pulverförmige Materialien großer Menge und niedriger Dosiergenauigkeit in größeren Behältern wie Silos gelagert, während Additive mittlerer Menge und mittlerer Dosiergenauigkeit in Behältern mittlerer Größe und schließlich Additive kleiner Menge und hoher Dosiergenauigkeit in kleinen Behältern oder Säcken gelagert werden. Um ein gewünschtes Produkt nach einer bestimmten Rezeptur aus bestimmten Ausgangsmaterialien herstellen zu können, wird üblicherweise eine gemeinsame Dosiereinrichtung verwendet, die von Behälter zu Behälter transportiert wird oder an die die Behälter nach der Reihe angeschlossen werden. Dabei wird es zwischen der Dosierung verschiedener Materialien notwendig sein, die Dosiereinrichtung zu reinigen, da es sonst zu unzulässigen Rezepturabweichungen kommen würde. Dies ist beispielsweise in der chemischen Industrie beim Dosieren von Farbpigmenten erforderlich, um die resultierenden Farben nicht zu fälschen. Änderungen der Materialien sind immer mit sehr großem Aufwand verbunden.

Eine Dosiervorrichtung für pulverförmige Produkte ist beispielsweise aus der DE 197 28 624 C2 bekannt, wobei jedem Vorratsbehälter eine Dosiereinrichtung zugeordnet ist, welche das jeweilige Material in eine Behälterwaage dosiert. Danach werden die dosierten Pulver über pneumatische Förderleitungen einer Kontrollwaage und schließlich einem Mischer zugeführt. Dabei ist es jedoch regelmäßig notwendig, die Förderleitungen sowie die Wiegeeinrichtungen zu reinigen, was den Verfahrensaufwand wesentlich erhöht. Auch kann es bei feinkörnigen schweren Bestandteilen bei pneumatischer Förderung zu Entmischungen kommen.

Eine Vorrichtung zum Dosieren und Mischen pulverförmiger Materialien der gegenständlichen Art aus dem Bereich der Lebensmittelindustrie ist aus der DE 199 09 896 C2 bekannt. Dabei wird eine Schüttgutmischung zur Herstellung einer Backware durch Dosierung und Mischung der pulverförmigen Komponenten hergestellt. Die Chargenbehälter werden zur Aufnahme des gemischten Pulvers durch Auswechseln der Deckel an die unterschiedlichen Funktionen angepasst. Dabei wird der Transportdeckel lose auf den Rand des Behälters aufgelegt. Für die Abfüllung besonders heikler Stoffe, beispielsweise in der pharmazeutischen Industrie, wäre eine derartige Vorrichtung nicht geeignet. Darüber hinaus ist zur Enleerung des Chargenbehälters eine Drehung desselben um 180° erforderlich, da diese über einen trichterförmig gestalteten Entleerdeckel erfolgt.

Die DE 38 18 637 A1 zeigt eine Vorrichtung zum Zusammenführen rieselfähiger Materialkomponenten zu einer Mischung, wobei im Wesentlichen horizontal nebeneinander angeordnete Vorratsbehälter für die Ausgangsmaterialien vorgesehen sind, an deren Böden jeweils eine Dosierschnecke angeflanscht ist, welche die Materialien jeweils einem zugeordneten Wiegebehälter zuführen. Vom Wiegebehälter wird das dosierte Material über einen drehbar gelagerten Kipparm in einen darunter angeordneten Sammelbehälter befördert. Dabei werden alle Komponenten gleichzeitig in die Wiegebehälter dosiert und dann hintereinander in den Sammelbehälter geleert und danach einer Mischung zugeführt. Die Vorratsbehälter sind fix verankert und mit Versorgungsleitungen verbunden, was einen Wechsel derselben bzw. einen Wechsel des darin enthaltenen Produkts nur mit großem Aufwand durchführen lässt. Da die Dosier- und Wiegeeinrichtungen den einzelnen Vorratsbehältern zugeordnet sind, muss auch bei Wechsel der Vorratsbehälter die Dosier- und Wiegeeinrichtung gewechselt oder zumindest gereinigt werden.

Die DE 101 42 949 A1 zeigt eine Vorrichtung zum Herstellen eines Gemischs aus Ausgangsstoffen, bei dem die Vorratsbehälter für die Ausgangsmaterialien im Wesentlichen horizontal nebeneinander angeordnet sind und unter den Vorratsbehältern ein Sammel- oder Chargenbehälter bewegbar angeordnet ist. Auch bei dieser Konstruktion sind den einzelnen Vorratsbehältern Dosiereinrichtungen zugeordnet. Weiters weist der Sammelbehälter an der Unterseite keine Klappe oder dergl. auf, weshalb eine Entleerung desselben nur durch aufwendige Drehung um 180° möglich ist.

Schließlich zeigt die DE 38 16 202 A1 eine Konstruktion einer Anlage zur Herstellung und Verpackung eines Mehrstoffgemisches, bei der im Wesentlichen horizontal nebeneinander Vorratsbehälter für die Ausgangsmaterialien angeordnet sind, unter welchen jeweils eine Austrags-, Wiege- und Übergabevorrichtung angeordnet ist. Unterhalb der Abfüllstationen sind Behälter bewegbar angeordnet, in welche die Einzelkomponenten zudosiert werden. Der Umfüllvorgang von den Wiegebehältern erfolgt durch eine relativ aufwendige 180° Drehbewegung des Wiegebehälters.

Die EP 499 573 A1 beschreibt eine Vorrichtung zur Einbringung von Kunststoffpartikeln in eine Betonmischung. Dabei steht nicht die Dosierung verschiedenster Ausgangsmaterialien in genau vorgegebenen Mengen zur Herstellung eines Zwischenprodukts oder Endprodukts im Vordergrund, sondern die möglichst gleichmäßige Einbringung der Partikel in die Betonmischung. Eine Veränderung der Zusammensetzung der Mischung ist mit der Vorrichtung gemäß diesem Dokument nicht beabsichtigt.

Die DE 30 36 968 A1 zeigt ein Verfahren zur Steuerung eines Mischprozesses mit festen und/oder flüssigen Rohstoffen, durch welche eine möglichst exakte kontinuierliche Zusammenführung aller Ingredienzien ermöglicht wird und Abweichungen laufend erfasst werden. Das Verfahren ist nicht darauf ausgelegt rasche und einfache Änderungen der Zusammensetzung der Mischung bei gleichzeitig möglichst geringem Reinigungsaufwand von Komponenten der Dosier- und Mischvorrichtung zu ermöglichen.

Die US 5,527,107 A zeigt eine Vorrichtung zur kontinuierlichen Mischung und Homogenisierung, wobei die Gleichzeitigkeit der Zusammenmischung der Ausgangsprodukte in einem Mischer ermöglicht wird. Auch bei dieser Vorrichtung ist es bei einer Änderung der Zusammensetzung der Mischung in relativ aufwändiger Weise notwendig, Komponenten zu reinigen bzw. auszutauschen.

Die Aufgabe der vorliegenden Erfindung besteht in der Schaffung einer Dosier- und Mischvorrichtung , welche möglichst flexibel und erweiterbar ist, und zudem möglichst einfach aufgebaut ist. Darüber hinaus sollen bei einer Änderung der Zusammensetzung der Mischung möglichst wenig Komponenten einer Reinigung bedürfen, so dass der Dosier- und Mischablauf allenfalls nicht zu lange unterbrochen werden muss. Schließlich soll eine rasche und genaue Dosierung möglich sein und die Dosierung und Mischung möglichst automatisiert erfolgen.

Die Aufgabe gemäß Anspruch 1 wird durch eine Dosier- und Mischvorrichtung gelöst, wobei die Vorratsbehälter als Dosierbehälter mit integrierten Dosiereinrichtungen ausgebildet sind. Da Deckel und Klappen der Chargenbehälter automatisch betätigbar sind und unterhalb eines oder mehrerer Dosierbehälter zumindest ein Sammeltrichter zum Sammeln zumindest eines Ausgangsmaterials angeordnet ist, an welchen Sammeltrichter ein Füllkopf zur Befüllung des Chargenbehälters angeschlossen ist, welcher Füllkopf eine Einrichtung zur Betätigung des Deckels des zu befüllenden Chargenbehälters aufweist. Durch eine derartige Ausgestaltung der Vorratsbehälter und Chargenbehälter der Dosier- und Mischvorrichtung wird eine optimale und automatisierbare Befüllung derselben und Entleerung derselben ermöglicht. Eine aufwendige Manipulation der Behälter zur Entleerung, beispielsweise durch Drehung um 180° ist durch die Klappe oder dergl. an der Unterseite des Chargenbehälters nicht erforderlich. Die gegenständliche Dosier- und Mischvorrichtung zeichnet sich durch eine besonders geringe Bauhöhe aus, da die Komponenten im Wesentlichen nebeneinander angeordnet sind. Durch diese Anordnung ist auch eine Erweiterung besonders einfach und rasch realisierbar. Der Sammeltrichter zum Sammeln zumindest eines Ausgangsmaterials kann genau unterhalb eines Dosierbehälters angeordnet sein und das Ausgangsmaterial dieses Dosierbehälters vor der Weitergabe an den Chargenbehälter entsprechend sammeln. Ebenso ist es möglich, dass beispielsweise unterhalb von mehreren Dosierbehältern der Sammeltrichter angeordnet ist und die Ausgangsmaterialien dieser Dosierbehälter hintereinander über den selben Sammeltrichter in den jeweiligen Chargenbehälter weitergeleitet werden.

Der Füllkopf zur Befüllung des Chargenbehälters wird an den Deckel des Chargenbehälters angedockt und ermöglicht somit eine staubfreie Befüllung des Chargenbehälters mit den im Sammeltrichter befindlichen Ausgangsmaterialien. Der Füllkopf weist eine Einrichtung zur Betätigung des Deckels des zu befüllenden Chargenbehälters auf, so dass beim Andocken des Füllkopfs an die Oberseite des Chargenbehälters der Deckel automatisch betätigt werden kann. Dies kann rein mechanisch aber auch pneumatisch, hydraulisch oder elektrisch geschehen. Zur Manipulation des Deckels eignet sich besonders eine Konstruktion mit einer Dreh-und Schwenkbewegung des Deckels. Im Gegensatz dazu weisen bisherige Dosier- und Mischanlagen häufig eine besonders große Bauhöhe auf, da die Vorratsbehälter über den Wiege- und Mischeinrichtungen angeordnet werden und darunter ein mit den Dosierbehältern über Dosiereinrichtungen verbundener stationärer Wiegebehälter platziert ist. Ein derartiger vertikaler Aufbau ist meist limitiert, wodurch eine Erweiterung auf neue Ausgangsmaterialien und somit eine Veränderung der Rezeptur mit hohem Aufwand verbunden ist. Bei bekannten Dosier- und Mischvorrichtungen sind Dosiereinrichtungen meist Kleinsilos zugeordnet und so wie diese stationär aufgebaut oder seltener auch stationäre Dosiereinrichtungen flexiblen Behältern zugeordnet. Meist sind die Dosiereinrichtungen jedoch nur für einen gleichbleibenden Rohstoff geeignet. Eine Änderung der Rezeptur ist mit sehr hohem Aufwand, der meist ein komplettes Zerlegen und Reinigen der Bestandteile umfasst, verbunden. Ein Produktwechsel kann bei der erfindungsgemäßen Misch- und Dosieranlage durch raschen Austausch des gesamten als Dosierbehälter mit integrierter Dosiereinrichtung ausgebildeten Vorratsbehälter ohne Reinigungsaufwand erfolgen. Zu einem späteren Zeitpunkt kann der entfernte Vorrats- bzw. Dosierbehälter wieder in die Misch- und Dosieranlage integriert werden, weshalb die Anlage an geänderte Rezepturen rasch und einfach angepasst werden kann. Dies ist insbesondere für komplizierte und kurzlebige Rezepturen sowie bei einer steigenden Zahl von Rohprodukten von großer Bedeutung. Die Dosiereinrichtungen werden vorzugsweise durch Dosierschnecken gebildet.

Vorteilhafterweise sind an den Oberseiten der Dosierbehälter Deckel angeordnet, so dass diese automatisiert oder händisch nachgefüllt werden können.

Gemäß einem weiteren Merkmal der Erfindung ist vorgesehen, dass die Verschluss- und Dosierklappen der Dosierbehälter automatisch betätigbar sind. Auf diese Weise kann eine automatisierte Mischung der pulverförmigen Materialien erfolgen.

Ebenso ist es von Vorteil, dass die Deckel der Dosierbehälter automatisch betätigbar sind. Die automatische Betätigung kann pneumatisch oder elektrisch erfolgen.

Der Sammeltrichter kann eine Wiegeeinrichtung beinhalten, über die das in den Chargenbehälter abgegebene Material abgewogen werden kann. Dabei sind verschiedene Konstruktionen der Wiegeeinrichtung möglich. Die im Sammeltrichter vorgesehene Wiegeeinrichtung bzw. der als Wiegeeinrichtung ausgebildete Sammeltrichter dient insbesondere für Feindosierungen kleinster Menge an Materialien mit höchster Genauigkeit.

Ebenso ist es möglich, dass Wiegerahmen vorgesehen sind, auf die die Dosierbehälter aufsetzbar sind. Die Dosierung über Wiegeeinrichtungen, welche in solchen Wiegerahmen unter den Dosierbehältern angeordnet sind oder in den Dosierbehältern integriert sind, stellt üblicherweise den Normalfall dar. Auf diese Art und Weise kann über eine Negativverwiegung das Material der Dosierbehälter in mittleren Mengen und mit mittleren Genauigkeiten verwogen werden. Die von den Wiegeeinrichtungen ausgehenden Daten können leitungsgebunden oder auch drahtlos an entsprechende Steuerungseinrichtungen übermittelt werden.

Vorteilhafterweise sind auch die im Wesentlichen horizontal nebeneinander angeordneten Dosierbehälter entlang einer vorgegebenen Bahn bewegbar angeordnet. Dadurch wird einerseits ein Austausch leerer Dosierbehälter möglich und andererseits ein Wechsel der Ausgangsmaterialien für sich ändernde Rezepturen rasch und einfach möglich. Ebenso können die Dosierbehälter entlang einer Bahn zu Nachfüllstationen bewegt werden.

Für Großkomponenten, welche in großer Menge und mit niedriger Dosiergenauigkeit zugeführt werden, können auch Großsilos und Förder- und Dosiereinrichtungen zur Beimengung dieser Großkomponenten in die Chargenbehälter oder Sammeltrichter vorgesehen sein. Diese Großsilos mit höherem Volumen als die Dosierbehälter können neben der Anlage platziert werden und über beispielsweise Schneckenförderer mit den Sammeltrichtern verbunden werden.

Weiters können Einrichtungen zur manuellen Beimengung von Materialien vorgesehen sein, welche baugleich mit den Dosierbehältern und den Chargenbehältern ausgebildet sind, wobei eine Öffnung zur Beimengung der Materialien vorgesehen ist. Diese Einrichtung zur manuellen Beimengung von Materialien können in die Dosier- und Mischvorrichtung ebenso wie normale Dosierbehälter aufgenommen werden, mit dem einzigen Unterschied, dass die beizumengenden Materialien von Hand aus in die Öffnung eingebracht werden. Ebenso können diese Einrichtungen zur manuellen Beimengung von Materialien auch über den Dosierbehältern angeordnet werden und auf diese Weise bestimmte Materialien von Hand aus in die Dosierbehälter eingebracht werden. Die Öffnung kann seitlich angeordnet sein, so dass ein Einbringen der Materialien, beispielsweise aus Säcken, leicht möglich wird.

Ebenso ist es von Vorteil, wenn die Dosierbehälter Rührwerke enthalten. Derartige Rührwerke dienen vorzugsweise dazu die im Dosierbehälter befindlichen Materialien restlos auszutragen, so dass im Dosierbehälter im Wesentlichen kein Material verbleibt. Zu diesem Zweck ist der Dosierbehälter an seiner Unterseite, vorzugsweise flach ausgebildet.

Gemäß einem weiteren Merkmal der Erfindung ist vorgesehen, dass die Bewegungsbahnen der Chargenbehälter und bzw. oder der Dosierbehälter durch einzelne Elemente aufgebaut sind, welche Fördereinrichtungen, vorzugsweise Rollen, aufweisen. Durch einen derartigen modularen Aufbau wird eine Änderung der Dosier- und Mischvorrichtung bzw. eine Erweiterung besonders rasch und einfach möglich. Anstelle der Ausbildung der Bewegungsbahnen mit Rollen sind auch Systeme mit Kettenförderern denkbar.

Dabei können einzelne Elemente der Bewegungsbahnen drehbar angeordnet sein, um eine Richtungsänderung der entlang der Bewegungsbahnen beförderten Chargenbehälter und bzw. oder Dosierbehälter zu erzielen. Auch bei der Ausbildung der Bewegungsbahnen durch Kettenförderer können drehbare Kettenförderertische angeordnet sein. Ebenso ist es möglich, dass die Chargenbehälter und bzw. oder die Dosierbehälter entlang einer Bewegungsbahn hängend transportiert werden. Zu diesem Zweck werden die Chargen- und bzw. oder die Dosierbehälter an der Oberseite mit einer entsprechenden Konstruktion ausgestattet, welche auf einem sogenannten Überkopfförderer aufliegt. Ein derartiger Überkopfförderer kann als beidseitig oder einseitig angetriebene Rollen- oder Scheibenbahn oder als Kettenförderer ausgeführt sein. Eine derartige Konstruktion hat bezüglich der Bodenfeiheit Vorteil.

Wenn Elemente der Bewegungsbahnen Wiegeeinrichtungen enthalten, kann das Befüllen der auf dem jeweiligen Element stehenden Chargenbehälter oder Dosierbehälter mit Materialien gewogen werden und somit die Menge des beigefügten Materials eingestellt werden.

Vorteilhafterweise ist oberhalb der Dosierbehälter eine Transporteinrichtung, beispielsweise ein Kran zum Bewegen der Dosierbehälter oder zum Positionieren von Nachfüllbehältern, angeordnet. Dadurch wird ein rascher Austausch von Dosierbehältern und somit eine rasche Anpassung der Anlage an geänderte Situationen möglich.

Die Dosierbehälter und bzw. oder die Chargenbehälter sind vorteilhafterweise aus einem Behälter gebildet, welcher innerhalb eines Rahmens angeordnet ist. Der Rahmen verleiht dem Dosierbehälter oder Chargenbehälter die erforderliche Stabilität und bietet darüber hinaus Möglichkeiten zur Manipulation.

Insbesondere im Falle der Chargenbehälter ist der Behälter nach unten trichterförmig zusammenlaufend ausgebildet. Dadurch wird das darin befindliche Pulver zur Klappe an der Unterseite des Chargenbehälters geleitet.

Dabei weisen Behälter und Rahmen vorteilhafterweise rechteckigen Grundriss auf. Dadurch wird ein Aneinanderreihen mehrerer Dosierbehälter oder Chargenbehälter unter optimaler Ausnützung des Platzes möglich.

Wenn an der Unterseite des Rahmens Öffnungen zur Aufnahme der Gabeln eines Gabelstaplers oder dergl. vorgesehen sind, kann der Dosierbehälter und der Chargenbehälter einfach mit einem entsprechenden Gabelstapler oder dergl. transportiert werden.

Alternativ oder zusätzlich dazu können die Dosierbehälter und bzw. oder die Chargenbehälter an ihrer Oberseite Öffnungen zum Einhängen einer Hebeeinrichtung aufweisen. Dadurch wird die Manipulation mit Hilfe eines Krans möglich.

Vorteilhafterweise sind vier Einhängevorrichtungen an jeder Ecke der Oberseite des Dosierbehälters und bzw. oder des Chargenbehälters vorgesehen. Dies ermöglicht ein Anheben des Dosierbehälters mit Hilfe eines entsprechend gestalteten X-förmigen bzw. rechteckigen Hebewerkzeugs, ohne dass die Gefahr des Pendelns des Dosierbehälters gegeben ist. Dadurch wird ein exaktes Aufsetzen möglich. Dies wiederum erleichtert einen vollautomatischen Betrieb der Dosier- und Mischanlage.

Wenn sowohl die Dosierbehälter als auch die Chargenbehälter identische Außenabmessungen aufweisen, wird ebenso die Flexibilität erhöht, da die Dosierbehälter und Chargenbehälter gegenseitig ausgetauscht werden können. Lediglich die in den Dosierbehältern befindliche Dosiereinrichtung ist im Chargenbehälter üblicherweise nicht enthalten.

Um ein Anheben der Dosierbehälter oder Chargenbehälter bzw. ein Absenken derselben zu ermöglichen, kann eine entlang der Bewegungsbahn der Dosierbehälter oder Chargenbehälter integrierte Hebeeinrichtung zum Heben der Dosierbehälter und bzw. oder der Chargenbehälter vorgesehen sein. Diese Hebeeinrichtung kann beispielsweise mit Gabeln in ähnlicher Weise wie jene eines Gabelstaplers ausgestattet sein, welcher in die oben erwähnten Öffnungen an der Unterseite des Rahmens der Dosierbehälter und bzw. oder der Chargenbehälter eingreift.

Für besonders hohe Flexibilität ist vorgesehen, dass die Hebeeinrichtung um 360° drehbar angeordnet ist.

Für einen Teilbetrieb oder vollautomatischen Betrieb ist es von Vorteil, wenn zumindest die Chargenbehälter und die Dosierbehälter Einrichtungen zur Identifikation aufweisen. Diese können beispielsweise durch Barcodes gebildet sein, welche von entsprechenden Leseeinrichtungen abgetastet werden oder auch durch integrierte Schaltungen, die mit entsprechenden Transpondern abgefragt werden können.

Gemäß einem weiteren Merkmal der Erfindung ist vorgesehen, dass die Chargenbehälter und die Dosierbehälter Schnittstellen zur Verbindung mit einer Steuereinrichtung aufweisen. Diese Schnittstellen ermöglichen ein Abfragen von Wiegeeinrichtungen in den Chargenbehältern und allenfalls Dosierbehältern aber auch eine Betätigung darin befindlicher Einrichtungen, wie z.B. Mischeinrichtungen, Dosiereinrichtungen oder Öffnungsmechanismen für den Deckel oder die Klappe.

Darüber hinaus ist es von Vorteil, wenn die Chargenbehälter und die Dosierbehälter Einrichtungen zur Verbindung mit einer elektrischen Spannungsversorgung einer Druckluftquelle oder dergl., insbesondere Steckverbindungen, aufweisen. Über diese Steckverbindungen oder Schleifverbindungen werden die Chargenbehälter und allenfalls Dosierbehälter an ihrer entsprechenden Position mit der notwendigen Energie versorgt, so dass ein Betrieb der Dosiereinrichtung oder Mischeinrichtung sowie ein automatisches Öffnen und Schließen des Deckels und der Klappe möglich wird.

Von Vorteil im Bezug auf einen vollautomatischen Betrieb ist es, wenn die Chargenbehälter entlang einer im Wesentlichen geschlossenen Bahn bewegbar sind.

Gemäß einem weiteren Merkmal der Erfindung ist vorgesehen, dass die Dosierbehälter eine Verschluss- und Dosierklappe an der Unterseite aufweisen.

Dabei sind die Verschluss- und Dosierklappen der Dosierbehälter vorzugsweise automatisch betätigbar. Auf diese Weise kann eine automatisierte Dosierung der pulverförmigen Materialien erfolgen.

In den Dosierbehältern kann eine Wiegeeinrichtung enthalten sein, über die das in dem Dosierbehälter befindliche Material gewogen werden kann. Dabei sind verschiedene Konstruktionen der Wiegeeinrichtung möglich.

Wenn zumindest eine Dosiereinrichtung für eine Grobdosierung und zumindest eine Dosiereinrichtung für eine Feindosierung vorgesehen ist, kann einerseits eine rasche Dosierung und andererseits eine genaue Dosierung erfolgen. Für größere Mengen des pulverförmigen Materials wird die Dosiereinrichtung für die Grobdosierung aktiviert und zum Zudosieren feiner Mengen schließlich die Dosiereinrichtung für eine Feindosierung aktiviert und entsprechend gesteuert.

Dabei können die zumindest zwei unterschiedlichen Dosiereinrichtungen durch zwei unterschiedlich große Förderschnecken gebildet sein.

Die vorliegende Erfindung wird anhand der beigefügten Zeichnungen, welche Ausführungsbeispiele einer Dosier- und Mischvorrichtung sowie Details davon zeigen, näher erläutert.

Darin zeigen:
Fig. 1 eine Seitenansicht einer erfindungsgemäßen Anlage zum Dosieren und Mischen pulverförmiger Materialien;
Fig. 2 eine Schnittdarstellung eines Teils einer Dosier- und Mischvorrichtung mit einem Großsilo für Großkomponenten;
Fig. 3a und 3b eine schematische Ansicht auf die Oberseite eines Chargenbehälters zur Veranschaulichung der automatischen Deckelöffnung;
Fig. 4a eine perspektivische Ansicht in einem teilweise geschnittenen Dosierbehälter mit darin angeordneter Dosiereinrichtung;
Fig. 4b eine teilweise geschnittene Ansicht durch einen Dosierbehälter;
Fig. 4c eine geschnittene Ansicht einer Variante eines Dosierbehälters mit Feindosierung;
Fig. 5a und Fig. 5b eine schematische Ansicht auf einen Chargenbehälter mit daran angeordneter automatisch betätigbarer Klappe;
Fig. 6a eine perspektivische Ansicht einer Einrichtung zur manuellen Beimengung von Materialien;
Fig. 6b eine Seitenansicht der Anordnung gemäß Fig. 6a;
Fig. 7 eine perspektivische schematische Ansicht einer Minimalversion einer Dosier- und Mischvorrichtung; und
Fig. 8 eine perspektivische schematische Ansicht einer erweiterten Dosier- und Mischanlage.

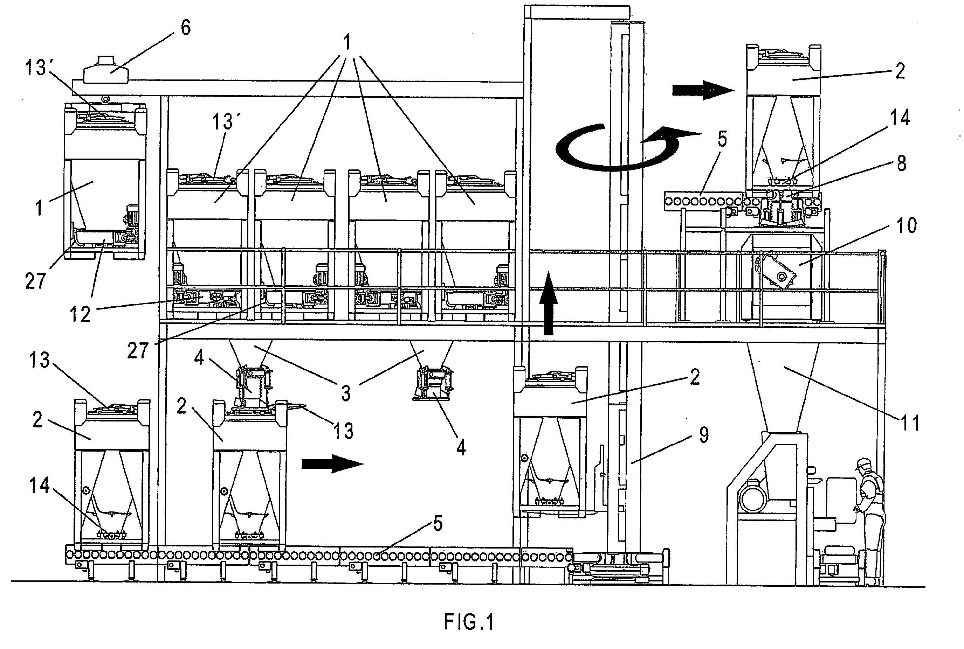

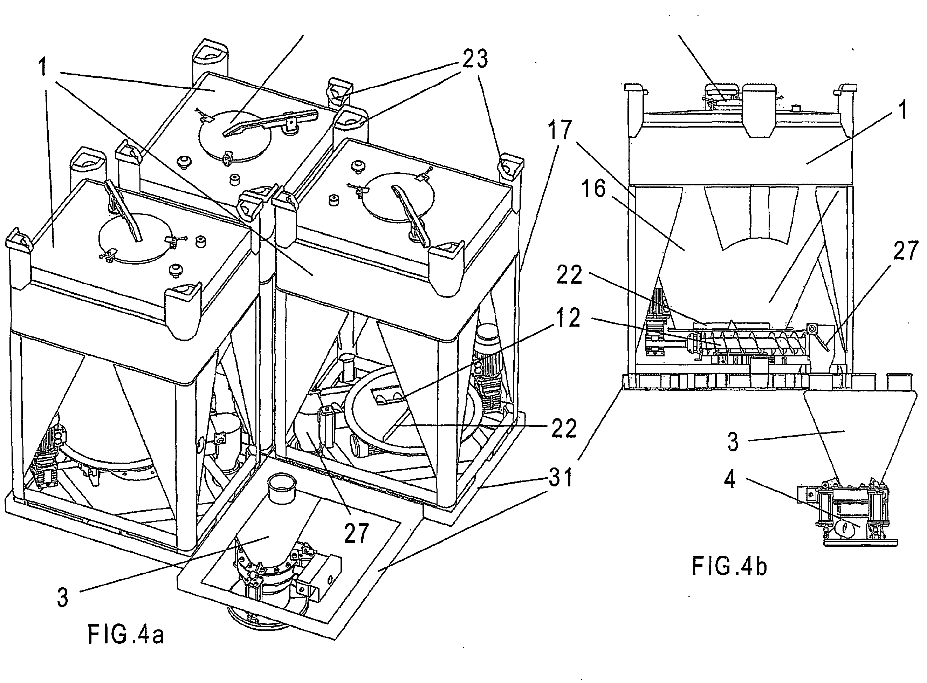

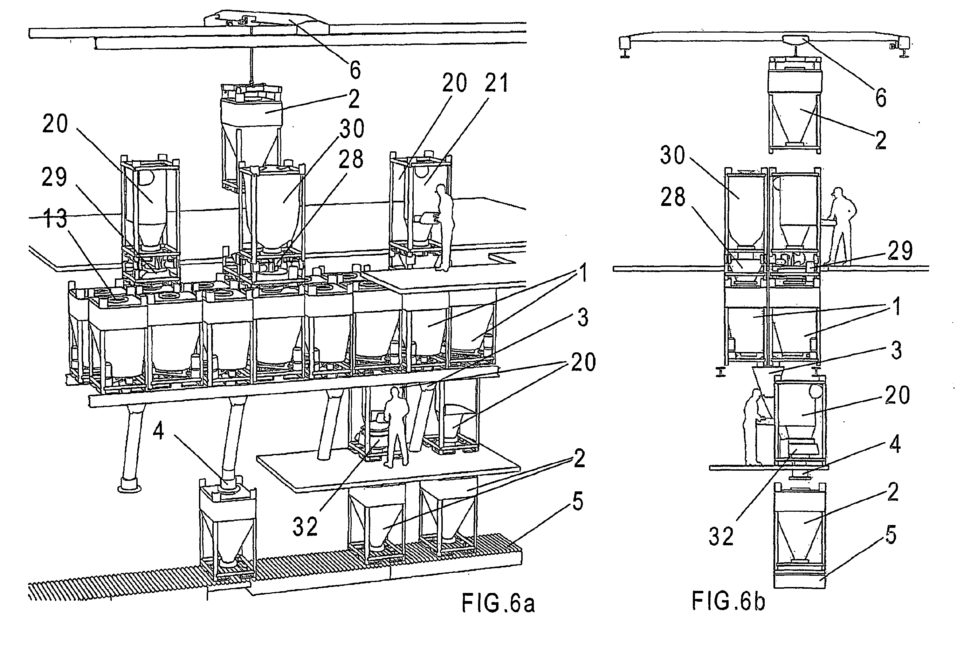

Fig. 1 zeigt eine Seitenansicht auf eine Ausführungsform einer Dosier- und Mischanlage, bei der mehrere als Dosierbehälter 1 ausgebildete Vorratsbehälter im Wesentlichen horizontal nebeneinander angeordnet sind. In den Dosierbehältern 1 befinden sich die verschiedenen pulverförmigen Ausgangsmaterialien, welche entsprechend dosiert und gemischt werden sollen. Unterhalb der Dosierbehälter 1 ist zumindest ein Chargenbehälter 2 zur Aufnahme dosierter Mengen an Ausgangsmaterialien aus den Dosierbehältern 1 bewegbar angeordnet. Die Bewegung der Chargenbehälter 2 wird beispielsweise durch eine Rollenbahn 5 erzielt. Unterhalb eines oder mehrerer Dosierbehälter 1 ist zumindest ein Sammeltrichter 3 zum Sammeln zumindest eines Ausgangsmaterials angeordnet. Mit Hilfe von Dosiereinrichtungen 12, die in den Dosierbehältern 1 integriert sind, werden bestimmte Mengen an Ausgangsmaterial in den Sammeltrichter 3 abgegeben. Zur Messung der gewünschten Menge am Ausgangsmaterial kann im Sammeltrichter 3 eine Wiegeeinrichtung integriert sein bzw. können die Dosierbehälter 1 auf einzelnen Wiegerahmen 31 aufgesetzt sein (s. Fig. 4a und 4b). Über Wiegeeinrichtungen im Sammeltrichter 3 werden üblicherweise kleinste Mengen mit höchster Genauigkeit dosiert. Über die unter den Dosierbehältern 1 angeordneten Wiegerahmen 31 werden üblicherweise mittlere Mengen an Material mit mittleren Genauigkeiten dosiert. Die Dosierung über die Wiegerahmen 31 erfolgt durch eine sog. Negativverwiegung. Dadurch, dass jeweils ein Wiegerahmen 31 jeweils einem Dosierbehälter 1 zugeordnet ist, kann eine Verwiegung mehrerer Produkte aus mehreren Dosierbehältern gleichzeitig erfolgen. Dadurch wird ein besonders hoher Zeitgewinn erreicht, da die Materialien nicht, wie bei der Verwiegung über den Sammeltrichter 3 hintereinander in den Chargenbehälter 2, dosiert werden müssen. An den Sammeltrichter 3 ist ein Füllkopf 4 zur Befüllung der Chargenbehälter 2 angeschlossen. Die Chargenbehälter 2 weisen an ihrer Oberseite jeweils einen Deckel 13 und vorzugsweise auch die Dosierbehälter 1 weisen an ihrer Oberseite jeweils einen Deckel 13' auf, die vorzugsweise automatisch betätigbar sind. An der Unterseite der Dosierbehälter 1 ist jeweils eine Verschluss- und Dosierklappe 27 oder dergl. angeordnet. Nach der Befüllung des Chargenbehälters 2 mit entsprechenden Mengen an Ausgangsmaterialien der Dosierbehälter 1 wird dieser entlang der Rollenbahn 5 weitertransportiert und mit Hilfe einer Hebeeinrichtung 9 zu einer Mischeinrichtung 10 befördert. Die Hebeeinrichtung 9 ist vorzugsweise um 360° drehbar angeordnet. Von der Hebeeinrichtung 9 wird der jeweilige Chargenbehälter 2 wiederum auf eine Rollenbahn 5 gesetzt und dann über die Mischeinrichtung 10 bewegt. An der Unterseite der Chargenbehälter 2 sind Klappen 14 angeordnet, welche vorzugsweise automatisch betätigbar sind. Mit Hilfe einer Einrichtung 8 zum staubdichten Andocken und zum Bewegen der Klappe 14 an der Unterseite des Chargenbehälters 2 wird dieser geöffnet, worauf das darin befindliche pulverförmige Material in den Mischer 10 gelangt und danach zur Weiterverarbeitung, beispielsweise in eine Absackanlage 11, übergeben wird. Nach der Entleerung des Chargenbehälters 2 wird dieser über die Rollenbahn 5 zur Hebeeinrichtung 9 zurückbewegt und danach wieder unterhalb den Dosierbehältern 1 zur Wiederbefüllung angeordnet oder einer Reinigung zugeführt. Oberhalb der Dosierbehälter 1 kann eine Transporteinrichtung, beispielsweise ein Kran 6, zum Bewegen der Dosierbehälter 1 oder zum Positionieren von Nachfüllbehältern (s. Fig. 6a und 6b) angeordnet sein.

Wie bereits weiter oben erwähnt können anstelle von Rollenbahnen 5 auch Kettenförderer oder dergl. verwendet werden. Schließlich sind auch Konstruktionen zur Beförderung der Chargenbehälter 2 und bzw. oder Dosierbehälter 1 möglich, welche eine Bodenfreiheit bieten, indem die Chargenbehälter 2 und bzw. oder Dosierbehälter 1 hängend transportiert werden (nicht dargestellt). In diesem Fall sind an der Oberseite der Chargenbehälter 2 und bzw. oder Dosierbehälter 1 Konstruktionen angeordnet, welche auf einen Überkopfförderer aufliegen. Diese Förderer können als beidseitig oder einseitig angetriebene Rollen- oder Scheibenbahn oder als Kettenförderer ausgeführt sein.

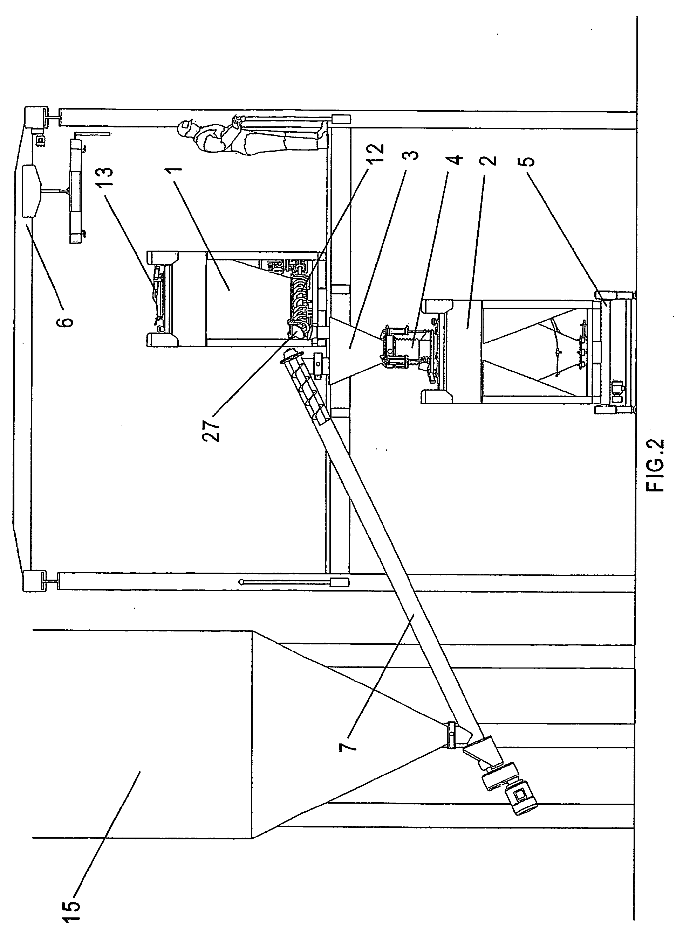

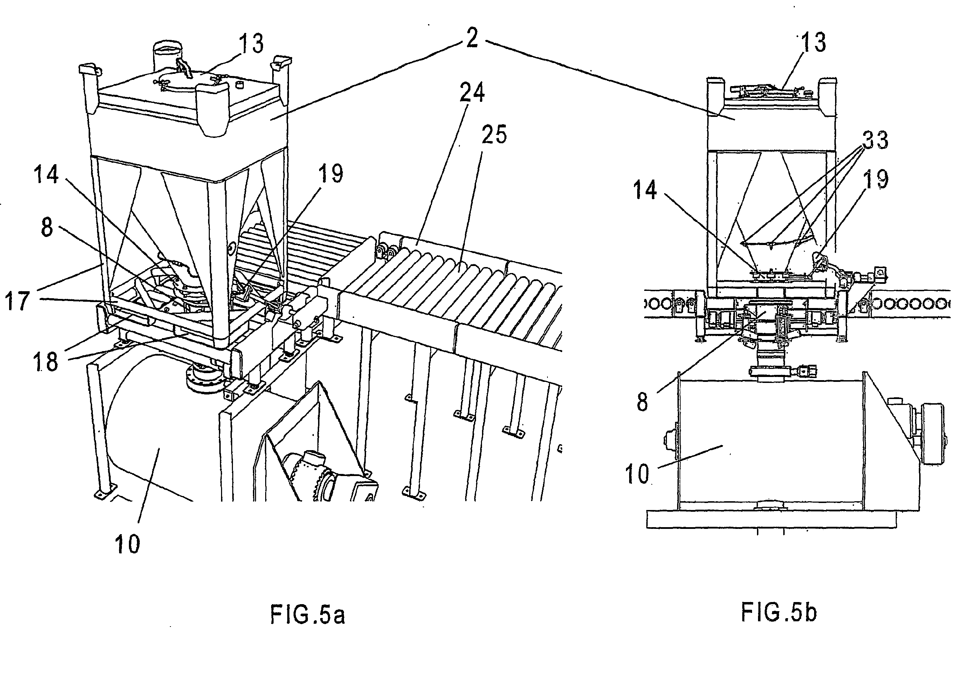

Fig. 2 zeigt eine Schnittansicht eines Teils einer Dosier- und Mischanlage, wobei ein Großsilo 15 für pulverförmige Materialien großer Menge und niedriger Dosiergenauigkeit neben den Dosierbehältern 1 angeordnet ist. Über eine Förder- und Dosiereinrichtung 7 wird das pulverförmige Material aus dem Großsilo 15 in den Sammeltrichter 3 befördert. Das aus dem Großsilo 15 beigemengte Material wird zusammen mit dem Material oder den Materialien aus dem oder den Dosierbehältern 1 oder zeitlich davon oder danach in den Sammeltrichter 3 aufgenommen und über den Füllkopf 4 in den Chargenbehälter 2 eingebracht. Die Verwiegung des Materials aus dem Großsilo 15 kann über eine Wiegeeinrichtung 25 an der Rollenbahn 5 direkt zum Chargenbehälter 2 erfolgen (s. Fig. 5a). Danach wird der Chargenbehälter 2 über die Rollenbahn 5 weiterbewegt.

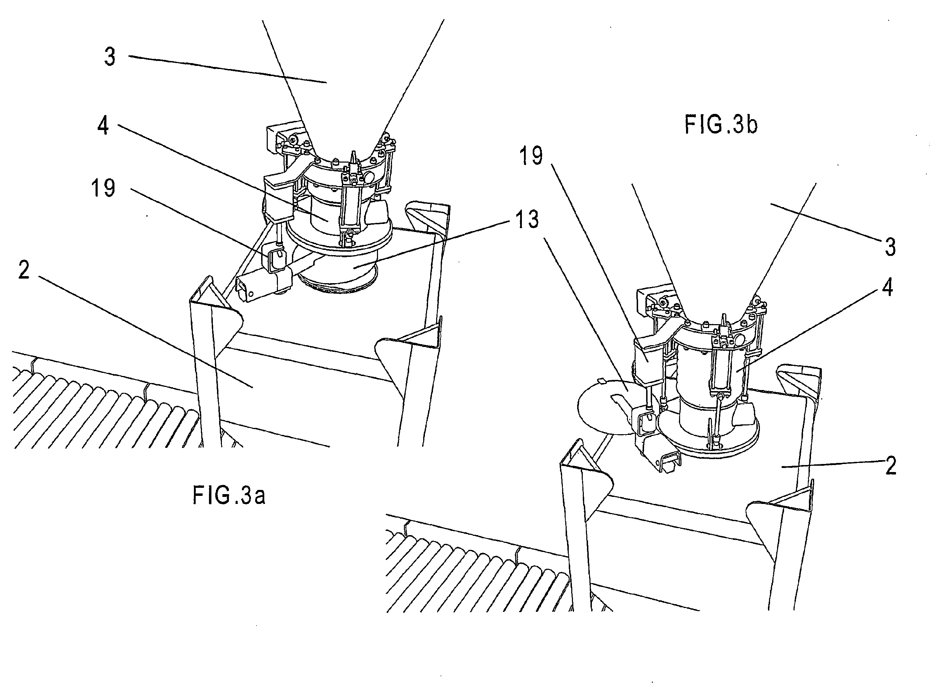

Die Figuren 3a und 3b zeigen eine perspektivische schematische Ansicht auf die Oberseite eines Chargenbehälters 2 mit einem entsprechenden Deckel 13. Über den Füllkopf 4 wird der Deckel 13 angehoben und schließlich zur Seite gedreht, worauf der Füllkopf 4 an die Öffnung des Chargenbehälters 2 angedockt wird und das im Sammeltrichter 3 befindliche Material in den Chargenbehälter 2 eingebracht wird. Somit ist eine automatische Öffnung des Deckels 13 möglich.

Fig. 4a zeigt eine schematische perspektivische Ansicht mehrerer nebeneinander angeordneten Dosierbehälter 1 und Fig. 4b eine geschnittene Darstellung eines Dosierbehälters 1 samt darunter angeordnetem Sammeltrichter 3. Gemäß einer bevorzugten Ausführungsform des Dosierbehälters 1 besteht dieser aus einem Behälter 16, der innerhalb eines Rahmens 17 angeordnet ist. Wenn der Behälter 16 und der Rahmen 17 rechteckigen oder quadratischen Grundriss aufweisen, ist eine besonders platzsparende Aneinanderreihung der Dosierbehälter 1 möglich. Innerhalb des Dosierbehälters 1 ist eine Dosiereinrichtung 12 in Form einer Dosierschnecke integriert, die das pulverförmige Material in den Sammeltrichter 3 weiterleitet. Zusätzlich kann innerhalb des Dosierbehälters 1 ein Rührwerk 22 als Austragshilfe vorgesehen sein, so dass eine restlose Entleerung des Dosierbehälters 1 möglich wird. Weiters sind an der Oberseite des Dosierbehälters 1 Öffnungen 23 zum Einhängen einer Hebeeinrichtung vorgesehen, welche eine Manipulation der Dosierbehälter 1 aber auch der ebenso gestalteten Chargenbehälter 2 mit Hilfe eines Krans ermöglichen. Die Hebeeinrichtung kann wie in Fig. 1 dargestellt durch einen Kran 6 gebildet sein, an den eine plattenförmige oder X-förmige Konstruktion angeschlossen ist, welche Haken aufweist, die in die Einhängeöffnungen 23 an der Oberseite des Dosierbehälters und bzw. oder des Chargenbehälters 2 einhängbar sind. Am Ende der Dosiereinrichtung 12 ist eine Verschluss- und Dosierklappe 27, welche vorzugsweise automatisch betätigbar ist, angeordnet. Der Dosierbehälter 1 kann auf einem Wiegerahmen 31 aufgesetzt werden, der eine entsprechende Wiegeeinrichtung enthält, so dass die Dosierung des im Dosierbehälter 1 befindlichen Materials über eine Negativverwiegung erfassbar ist.

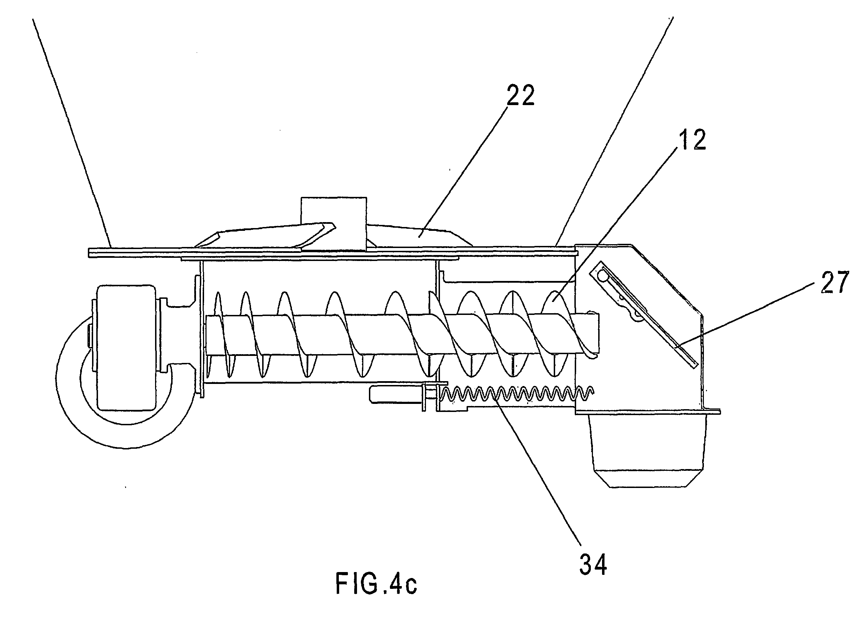

Fig. 4c zeigt eine geschnittene Ansicht einer Variante eines Dosierbehälters 1 mit Feindosierung. Zu diesem Zweck ist neben der Dosiereinrichtung 12 in Form einer Förderschnecke zur Grobdosierung eine weitere Dosiereinrichtung 34 in Form einer kleineren Förderschnecke vorgesehen. Durch Ansteuerung der Dosiereinrichtung 12 für die Grobdosierung kann über die Verschluss- und Dosierklappe 27 eine größere Menge des pulverförmigen Materials zudosiert werden. Über die Dosiereinrichtung 34 für die Feindosierung erfolgt dann die jeweilige feine Dosierung des pulverförmigen Materials.

Fig. 5a zeigt eine perspektivische Ansicht und Fig. 5b eine Seitenansicht eines Chargenbehälters 2, mit der darin angeordneten Klappe 14. Mit Hilfe einer Betätigungseinrichtung 19 kann die Klappe 14 automatisch geöffnet und wieder verschlossen werden, so dass der Inhalt des Chargenbehälters 2, beispielsweise in eine Mischeinrichtung 10, entleert werden kann. Zur Unterstützung der Entleerung der Chargenbehälter 2 können pneumatische Auflockerungsdüsen 33 angeordnet sein, welche das im Chargenbehälter 2 befindliche Material durch einen oder mehrere Druckluftstöße auflockern und eine komplette Entleerung über die Klappe 14 bewirken. An der Unterseite des Rahmens 17 des Chargenbehälters 2 oder auch des Dosierbehälters 1 sind vorzugsweise Öffnungen 18 zur Aufnahme der Gabeln eines Gabelstaplers oder dergl. oder der Gabeln der Hebeeinrichtung 9 angeordnet. Fig. 5a zeigt ein Element 24 der Rollenbahn 5, welches mehrere Rollen 25 zur Fortbewegung der Chargenbehälter 2 und allenfalls Dosierbehälter 1 aufweist. Die Rollen 25 können mit verschiedenen Antriebseinheiten verbunden werden.

Fig. 6a zeigt eine perspektivische Ansicht der Anordnung von Einrichtungen 20 zur manuellen Beimengung von Materialien und Fig. 6b eine Seitenansicht davon. Über den Dosierbehältern 1 können derartige Einrichtungen 20 zur manuellen Beimengung von Materialien angeordnet werden, welche im Wesentlichen baugleich mit den Dosierbehältern 1 ausgebildet sein können und über eine vorzugsweise seitliche Öffnung 21 verfügen. Über diese Öffnung 21 kann eine händische Beimengung von Material in die Dosierbehälter 1 vorgenommen werden. Es kann auch ein Kontrollsieb 32 unter der Öffnung 21 angeordnet werden, um allfällige Verunreinigungen auszusieben. Ebenso können zum Auffüllen der Dosierbehälter 1 Nachfüllbehälter 30, welche beispielsweise aus in einem Rahmen angeordneten Säcken bestehen, angeordnet werden. Über Zwischenelemente 28 ohne Kontrollsieb 32 oder Zwischenelemente 29 mit Kontrollsieb 32 werden diese Nachfüllbehälter 30 oder Einrichtungen 20 zur manuellen Beimengung von Materialien an den Deckel 13 der Dosierbehälter 1 angedockt und befüllt. Zur Manipulation der Dosierbehälter 1 aber auch der Chargenbehälter 2 dient ein Kran 6.

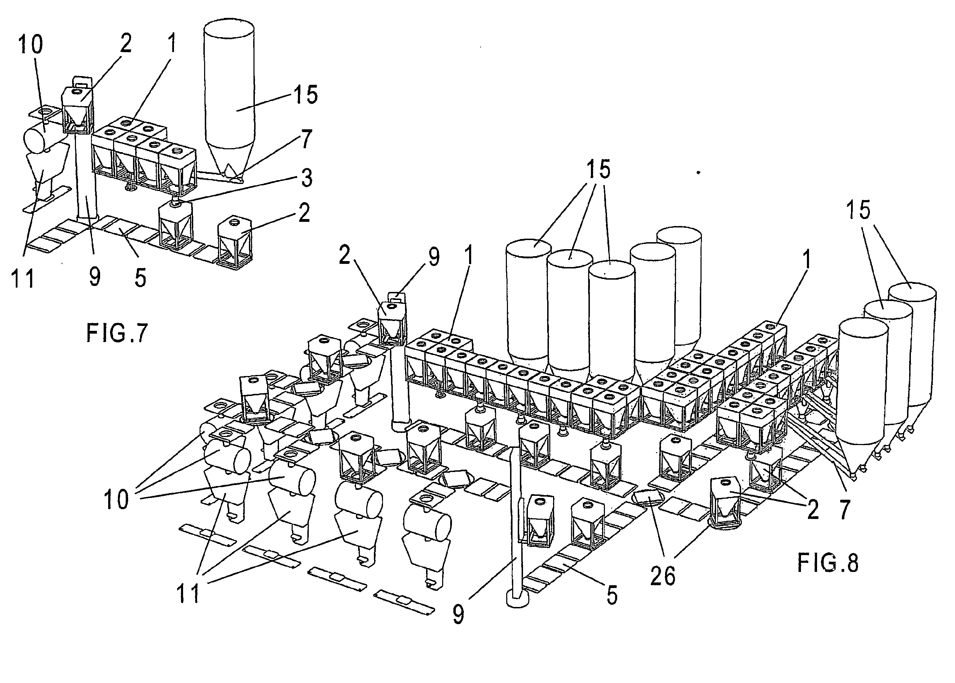

Fig. 7 zeigt eine perspektivische schematische Ansicht einer Minimalversion einer Dosier- und Mischanlage. Im dargestellten Beispiel sind insgesamt sechs Dosierbehälter 1, im Wesentlichen horizontal nebeneinander, angeordnet. Weiters ist ein Großsilo 15 vorgesehen, dessen Inhalt über eine Förder- und Dosiereinrichtung 7 zu einem Sammeltrichter 3 unterhalb der Dosierbehälter 1 geführt wird. Unterhalb der Dosierbehälter 1 sind die Chargenbehälter 2 bewegbar angeordnet. Zu diesem Zweck dient eine Rollenbahn 5. Über die Rollenbahn 5 kann der Chargenbehälter 2 zu einer Hebeeinrichtung 9 geführt werden, die den mit den entsprechenden pulverförmigen Materialien gefüllten Chargenbehälter 2 über eine Mischeinrichtung 10 hebt, wo der Inhalt des Chargenbehälters 2 abgelassen werden kann. Nach ausreichender Durchmischung des pulverförmigen Materials kann dieses beispielsweise einer Absackanlage 11 zugeführt werden. Wie bereits erwähnt kann die Bewegung der Chargenbehälter 2 und bzw. oder Dosierbehälter 1 auch an einem Überkopfförderer hängend erfolgen (nicht dargestellt). In diesem Fall ist die Hebeeinrichtung entweder gesamt drehbar oder beinhaltet einen drehbaren Förderer. Bei einem solchen System eines Überkopfförderers wird der heb-und senkbare Füllkopf 4 zwischen den Dosierbehälter 1 und dem Chargenbehälter 2 nur einmal je Chargenbehälter 2 angeordnet und kann in diesem integriert sein und sich entlang der Bewegungsbahn mitbewegen (nicht dargestellt).

Fig. 8 zeigt eine erweiterte Ausführungsform der Erfindung, bei der eine Vielzahl von Dosierbehältern 1 und Großsilos 15 angeordnet ist und bei der die Chargenbehälter 2 über entsprechende Rollenbahnen 5 in einem geschlossenen Kreislauf in Vollautomatikbetrieb transportiert werden können. Zur Erzielung eines Richtungswechsels auf den Rollenbahnen 5 dienen Elemente 26, welche drehbar sind. Über zwei Hebeeinrichtungen 9 können die entsprechend befüllten Chargenbehälter 2 über entsprechende Mischeinrichtungen 10 gehoben werden, wo sie ihren Inhalt in die Mischeinrichtungen 10 abgeben. Danach erfolgt beispielsweise eine Abfüllung des gemischten pulverförmigen Materials in sog. Absackanlagen 11. Die erfindungsgemäße Anlage ist besonders einfach erweiterbar und kann somit auf Änderungen der Zusammensetzung der zu dosierenden und mischenden Komponenten angepasst werden.

## Patentansprüche

1. Vorrichtung zum Dosieren und Mischen pulverförmiger Materialien, mit horizontal nebeneinander angeordneten Vorratsbehältern für die Ausgangsmaterialien mit einer Verschluss- und Dosierklappe (27) an der Unterseite, und mit Dosiereinrichtungen (12) zum Dosieren der Materialien, und mit zumindest einer Mischeinrichtung (10) zum Mischen der dosierten Materialien, wobei unterhalb der Vorratsbehälter zumindest ein Chargenbehälter (2) mit einem Deckel (13) an der Oberseite zur Aufnahme dosierter Mengen an Ausgangsmaterialien entlang einer vorgegebenen Bahn bewegbar angeordnet ist, wobei die Chargenbehälter (2) an der Unterseite mit einer Klappe (14) versehen sind, **dadurch gekennzeichnet, dass** die Vorratsbehälter als Dosierbehälter (1) mit integrierten Dosiereinrichtungen (12) ausgebildet sind, dass die Deckel (13) und Klappen (14) der Chargenbehälter (2) automatisch betätigbar sind, und dass unterhalb eines oder mehrerer Dosierbehälter (1) zumindest ein Sammeltrichter (3) zum Sammeln zumindest eines Ausgangsmaterials angeordnet ist, an welchem Sammeltrichter (3) ein Füllkopf (4) zur Befüllung des Chargenbehälters (2) angeschlossen ist, welcher Füllkopf (4) eine Einrichtung zur Betätigung des Deckels (13) des zu befüllenden Chargenbehälters (2) aufweist.

2. Dosier- und Mischvorrichtung nach Anspruch 1, **dadurch gekennzeichnet, dass** die Dosierbehälter (1) an ihrer Oberseite einen Deckel (13') aufweisen.

3. Dosier- und Mischvorrichtung nach Anspruch 1 oder 2, **dadurch gekennzeichnet, dass** die Verschluss- und Dosierklappen (27) der Dosierbehälter (1) automatisch betätigbar sind.

4. Dosier- und Mischvorrichtung nach Anspruch 2 oder 3, **dadurch gekennzeichnet, dass** die Deckel (13') der Dosierbehälter (1) automatisch betätigbar sind.

5. Dosier- und Mischvorrichtung nach einem der Ansprüche 1 bis 4, **dadurch gekennzeichnet, dass** der Sammeltrichter (3) eine Wiegeeinrichtung beinhaltet.

6. Dosier- und Mischvorrichtung nach einem der Ansprüche 1 bis 5, **dadurch gekennzeichnet, dass** Wiegerahmen (31) vorgesehen sind, auf die die Dosierbehälter (1) aufsetzbar sind.

7. Dosier- und Mischvorrichtung nach einem der Ansprüche 1 bis 6, **dadurch gekennzeichnet, dass** die Dosierbehälter (1) entlang einer vorgegebenen Bahn bewegbar angeordnet sind.

8. Dosier- und Mischvorrichtung nach einem der Ansprüche 1 bis 7, **dadurch gekennzeichnet, dass** Großsilos (15) für Großkomponenten, und Förder- und Dosiereinrichtungen (7) zur Beimengung dieser Großkomponenten in die Chargenbehälter (2) oder Sammeltrichter (3) vorgesehen sind.

9. Dosier- und Mischvorrichtung nach einem der Ansprüche 1 bis 8, **dadurch gekennzeichnet, dass** Einrichtungen (20) zur manuellen Beimengung von Materialien vorgesehen sind, welche baugleich mit den Dosierbehältern (1) und den Chargenbehältern (2) ausgebildet sind, wobei eine Öffnung (21) zur Beimengung der Materialien vorgesehen ist.

10. Dosier- und Mischvorrichtung nach einem der Ansprüche 1 bis 9, **dadurch gekennzeichnet, dass** die Dosierbehälter (2) Rührwerke (22) enthalten.

11. Dosier- und Mischvorrichtung nach einem der Ansprüche 1 bis 10, **dadurch gekennzeichnet, dass** die Bewegungsbahnen der Chargenbehälter (2) und bzw. oder der Dosierbehälter (1) durch einzelne Elemente (24) aufgebaut sind, welche Fördereinrichtungen, vorzugsweise Rollen (25), aufweisen.

12. Dosier- und Mischvorrichtung nach Anspruch 11, **dadurch gekennzeichnet, dass** Elemente (26) der Bewegungsbahnen drehbar angeordnet sind.

13. Dosier- und Mischvorrichtung nach Anspruch 11, **dadurch gekennzeichnet, dass** Elemente (24, 26) der Bewegungsbahnen Wiegeeinrichtungen enthalten.

14. Dosier- und Mischvorrichtung nach einem der Ansprüche 1 bis 13, **dadurch gekennzeichnet, dass** oberhalb der Dosierbehälter (1) eine Transporteinrichtung, beispielsweise ein Kran (6) zum Bewegen der Dosierbehälter (1) oder zum Positionieren von Nachfüllbehältern, angeordnet ist.

15. Dosier- und Mischvorrichtung nach einem der Ansprüche 1 bis 14, **dadurch gekennzeichnet, dass** die Dosierbehälter (1) und bzw. oder die Chargenbehälter (2) aus einem Behälter (16) gebildet sind, welcher innerhalb eines Rahmens (17) angeordnet ist.

16. Dosier- und Mischvorrichtung nach Anspruch 15, **dadurch gekennzeichnet, dass** der Behälter (16) nach unten trichterförmig zusammenlaufend ausgebildet ist.

17. Dosier- und Mischvorrichtung nach Anspruch 15 oder 16, **dadurch gekennzeichnet, dass** der Behälter (16) und der Rahmen (17) rechteckigen Grundriss aufweisen.

18. Dosier- und Mischvorrichtung nach einem der Ansprüche 15 bis 17, **dadurch gekennzeichnet, dass** an der Unterseite des Rahmens (17) Öffnungen (18) zur Aufnahme der Gabeln eines Gabelstaplers vorgesehen sind.

19. Dosier- und Mischvorrichtung nach einem der Ansprüche 1 bis 18, **dadurch gekennzeichnet, dass** die Dosierbehälter (1) und bzw. oder die Chargenbehälter (2) an ihrer Oberseite Öffnungen (23) zum Einhängen einer Hebeeinrichtung aufweisen.

20. Dosier- und Mischvorrichtung nach Anspruch 19, **dadurch gekennzeichnet, dass** vier Einhängeöffnungen (23) an jeder Ecke der Oberseite des Dosierbehälters (1) und bzw. oder des Chargenbehälters (2) vorgesehen sind.

21. Dosier- und Mischvorrichtung nach einem der Ansprüche 1 bis 20, **dadurch gekennzeichnet, dass** die Dosierbehälter (1) und die Chargenbehälter (2) identische Außenabmessungen aufweisen.

22. Dosier- und Mischvorrichtung nach einem der Ansprüche 1 bis 21, **dadurch gekennzeichnet, dass** eine Hebeeinrichtung (9) zum Heben der Chargenbehälter (2) und bzw. oder der Dosierbehälter (1) vorgesehen ist.

23. Dosier- und Mischvorrichtung nach Anspruch 22, **dadurch gekennzeichnet, dass** die Hebeeinrichtung (9) um 360° drehbar ist.

24. Dosier- und Mischvorrichtung nach einem der Ansprüche 1 bis 23, **dadurch gekennzeichnet, dass** die Chargenbehälter (2) und die Dosierbehälter (1) Einrichtungen zur Identifikation, beispielsweise Barcodes, aufweisen.

25. Dosier- und Mischvorrichtung nach einem der Ansprüche 1 bis 24, **dadurch gekennzeichnet, dass** die Chargenbehälter (2) und die Dosierbehälter (1) Schnittstellen zur Verbindung mit einer Steuereinrichtung aufweisen.

26. Dosier- und Mischvorrichtung nach einem der Ansprüche 1 bis 25, **dadurch gekennzeichnet, dass** die Chargenbehälter (2) und die Dosierbehälter (1) Einrichtungen zur Verbindung mit einer elektrischen Spannungsversorgung, einer Druckluftquelle, insbesondere Steckverbindungen, aufweisen.

27. Dosier- und Mischvorrichtung nach einem der Ansprüche 1 bis 26, **dadurch gekennzeichnet, dass** die Chargenbehälter (2) entlang einer geschlossenen Bahn bewegbar sind.

28. Dosier- und Mischvorrichtung nach einem der Ansprüche 1 bis 27, **dadurch gekennzeichnet, dass** die Dosierbehälter (1) eine Verschluss- und Dosierklappe (27) an der Unterseite aufweisen.

29. Dosier- und Mischvorrichtung nach Anspruch 28, **dadurch gekennzeichnet, dass** die Verschluss- und Dosierklappen (27) automatisch betätigbar sind.

30. Dosier- und Mischvorrichtung nach einem der Anspruch 1 bis 29, **dadurch gekennzeichnet, dass** in den Dosierbehältern (1) eine Wiegeeinrichtung enthalten ist.

31. Dosier- und Mischvorrichtung nach einem der Ansprüche 1 bis 30, **dadurch gekennzeichnet, dass** in den Dosierbehältern (1) zumindest eine Dosiereinrichtung (12) für eine Grobdosierung und zumindest eine Dosiereinrichtung (34) für eine Feindosierung vorgesehen ist.

32. Dosier- und Mischvorrichtung nach Anspruch 31, **dadurch gekennzeichnet, dass** die Dosiereinrichtungen (12, 34) durch zwei unterschiedlich große Förderschnecken gebildet sind.

## Claims

1. A device for the dosing and mixing of powdery materials, comprising reservoirs for the starting materials arranged horizontally next to each other, comprising a closing and dosing gate (27) at the bottom side, and comprising dosing devices (12) for dosing the materials, and comprising at least one mixing device (10) for mixing the dosed materials, wherein below the reservoir at least one batch tank (2) comprising a cover (13) at the upper side is arranged so as to be movably arranged along a predetermined path to receive dosed amounts of starting materials, wherein the batch tanks (2) are provided with a gate (14) at the bottom side, **characterized in that** the reservoirs are configured as dosing tanks (1) comprising integrated dosing devices (12), that the covers (13) and gates (14) of the batch tanks (2) can be activated automatically, and **in that** below one or several dosing tank(s) (1) at least one collecting funnel (3) is arranged for collecting at least one starting material, a filling head (4) being connected to the collecting funnel (3) for filling the batch tank (2), said filling head (4) having a device for activating the cover (13) of the batch tank (2) to be filled.

2. The dosing and mixing device according to claim 1, **characterized in that** the dosing tanks (1) have a cover (13') at their upper side.

3. The dosing and mixing device according to claim 1 or 2, **characterized in that** the closing and dosing gates (27) of the dosing tanks (1) can be activated automatically.

4. The dosing and mixing device according to claim 2 or 3, **characterized in that** the covers (13') of the dosing tanks (1) can be automatically activated.

5. The dosing and mixing device according to any one of claims 1 to 4, **characterized in that** the collecting funnel (3) contains a weighing device.

6. The dosing and mixing device according to any one of claims 1 to 5, **characterized in that** weighing frames (31) are provided, onto which the dosing tanks (1) may be placed.

7. The dosing and mixing device according to any one of claims 1 to 6, **characterized in that** the dosing tanks (1) are arranged so as to be movable along a predetermined path.

8. The dosing and mixing device according to any one of claims 1 to 7, **characterized in that** large silos (15) for large components, and conveying and dosing devices (7) are provided for admixing these large components to the batch tanks (2) or collecting funnels (3).

9. The dosing and mixing device according to any one of claims 1 to 8, **characterized in that** devices (20) are provided for manual admixing of materials, which are of the same configuration as the dosing tanks (1) and the batch tanks (2), wherein an opening (21) is provided for admixing materials.

10. The dosing and mixing device according to any one of claims 1 to 9, **characterized in that** the dosing tanks (2) contain stirring mechanisms (22).

11. The dosing and mixing device according to any one of claims 1 to 10, **characterized in that** the movement paths of the batch tanks (2) and/or of the dosing tanks (1) are composed of individual elements (24), which have conveying mechanisms, preferably rollers (25).

12. The dosing and mixing device according to claim 11, **characterized in that** elements (26) of the movement paths are arranged to be rotatable.

13. The dosing and mixing device according to claim 11, **characterized in that** elements (24, 26) of the movement paths contain weighing devices.

14. The dosing and mixing device according to any one of claims 1 to 13, **characterized in that** a transport device, such as a crane (6), is arranged above the dosing tanks (1) for moving the dosing tanks (1) or for positioning replenishment containers.

15. The dosing and mixing device according to any one of claims 1 to 14, **characterized in that** the dosing tanks (1) and/or the batch tanks (2) are formed by a tank (16) which is arranged inside a frame (17).

16. The dosing and mixing device according to claim 15, **characterized in that** the tank (16) has a downward-tapering funnel shape.

17. The dosing and mixing device according to claim 15 or 16, **characterized in that** the tank (16) and the frame (17) have a rectangular plan view.

18. The dosing and mixing device according to any one of claims 15 to 17, **characterized in that** openings (18) are provided at the bottom side of the frame (17) to accommodate the forks of a forklift truck.

19. The dosing and mixing device according to any one of claims 1 to 18, **characterized in that** the dosing tanks (1) and/or the batch tanks (2) have openings (23) at their upper side for insertion of a lifting mechanism.

20. The dosing and mixing device according to claim 19, **characterized in that** four suspension openings (23) are provided at each corner of the upper side of the dosing tank (1) and/or the batch tank (2).

21. The dosing and mixing device according to any one of claims 1 to 20, **characterized in that** the dosing tanks (1) and the batch tanks (2) have identical outer dimensions.

22. The dosing and mixing device according to any one of claims 1 to 21, **characterized in that** a lifting mechanism (9) for lifting the batch tanks (2) and/or the dosing tanks (1) is provided.

23. The dosing and mixing device according to claim 22, **characterized in that** the lifting mechanism (9) can be rotated by 360°.

24. The dosing and mixing device according to any one of claims 1 to 23, **characterized in that** the batch tanks (2) and the dosing tanks (1) have devices for identification, for example, barcodes or the like.

25. The dosing and mixing device according to any one of claims 1 to 24, **characterized in that** the batch tanks (2) and the dosing tanks (1) have interfaces for connection to a control mechanism.

26. The dosing and mixing device according to any one of claims 1 to 25, **characterized in that** the batch tanks (2) and the dosing tanks (1) have mechanisms for connection to an electrical voltage supply, a pressurized air source, especially plug connections.

27. The dosing and mixing device according to any one of claims 1 to 26, **characterized in that** the batch tanks (2) are movable along a closed path.

28. The dosing and mixing device according to any one of claims 1 to 27, **characterized in that** the dosing tanks (1) have a closing and dosing gate (27) at their bottom side.

29. The dosing and mixing device according to claim 28, **characterized in that** the closing and dosing gates (27) can be automatically activated.

30. The dosing and mixing device according to any one of claims 1 to 29, **characterized in that** a weighing mechanism is contained in the dosing tanks (1).

31. The dosing device and mixing device according to any one of claims 1 to 30, **characterized in that** at least, in the dosing tanks (1), one dosing mechanism (12) is provided for a rough dosing, and at least one dosing mechanism (34) for a fine dosing.

32. The dosing and mixing device per according to claim 31, **characterized in that** the dosing mechanisms (12, 34) are formed by two worm conveyors of different sizes.

## Revendications

1. Appareil pour doser et mélanger des matières pulvérulentes, comprenant des récipients de réserve agencés horizontalement les uns à côté des autres pour les matières de départ et dotés d'un clapet d'obturation et de dosage (27) à la face inférieure, et comprenant des moyens de dosage (12) pour doser les matières, et comprenant au moins un moyen de mélange (10) pour mélanger les matières dosées, dans lequel au-dessous des récipients de réserve est agencé au moins un récipient de charge (2) avec un couvercle (13) à la face supérieure pour la réception de quantités dosées de matières de départ, mobile le long d'une trajectoire prédéterminée, lesdits récipients de charge (2) étant pourvus d'un clapet (14) à la face inférieure,
**caractérisé en ce que** les récipients de réserve sont réalisés sous forme de récipients de dosage (1) avec systèmes de dosage intégrés (12), **en ce que** les couvercles (13) et les clapets (14) des récipients de charge (2) sont susceptibles d'être actionnés automatiquement, et **en ce qu'**au-dessous d'un ou plusieurs récipients de charge (1) est agencée au moins une trémie de collecte (3) pour collecter au moins une matière de départ, une tête de remplissage (4) destinée au remplissage du récipient de charge (2) étant raccordée à ladite trémie de collecte (3), ladite tête de remplissage (4) comprenant un système pour actionner le couvercle (13) du récipient de charge (2) à remplir.

2. Appareil pour doser et mélanger selon la revendication 1, **caractérisé en ce que** les récipients de dosage (1) comprennent un couvercle (13') à leur face supérieure.

3. Appareil pour doser et mélanger, selon la revendication 1 ou 2, **caractérisé en ce que** les clapets d'obturation et de dosage (27) des récipients de dosage (1) sont susceptibles d'être actionnés automatiquement.

4. Appareil pour doser et mélanger selon la revendication 2 ou 3, **caractérisé en ce que** les couvercles (13') des récipients de dosage (1) sont susceptibles d'être actionnés automatiquement.

5. Appareil pour doser et mélanger selon l'une des revendications 1 à 4, **caractérisé en ce que** la trémie de collecte (3) comprend un dispositif de dosage.

6. Appareil pour doser et mélanger selon l'une des revendications 1 à 5, **caractérisé en ce qu'**il est prévu des cadres de pesage (31) sur lesquels les récipients de dosage (1) peuvent être posés.

7. Appareil pour doser et mélanger selon l'une des revendications 1 à 6, **caractérisé en ce que** les récipients de dosage (1) sont agencés de manière mobile le long d'une trajectoire prédéterminée.

8. Appareil pour doser et mélanger selon l'une des revendications 1 à 7, **caractérisé en ce qu'**il est prévu des silos de grande taille (15) pour des composants en grande quantité, et des moyens d'acheminement et de dosage (7) pour l'addition de ces composants en grande quantité dans les récipients de charge (2) ou dans la trémie de collecte (3).

9. Appareil pour doser et mélanger selon l'une des revendications 1 à 8, **caractérisé en ce qu'**il est prévu des moyens (20) pour l'addition manuelle de matières, ces moyens étant de même structure que les récipients de dosage (1) et que les récipients de charge (2), et dans lequel il est prévu une ouverture (21) pour l'addition des matières.

10. Appareil pour doser et mélanger selon l'une des revendications 1 à 9, **caractérisé en ce que** les récipients de dosage (2) contiennent des agitateurs (22).

11. Appareil pour doser et mélanger selon l'une des revendications 1 à 10, **caractérisé en ce que** les trajectoires de déplacement des récipients de charge (2) et/ou des récipients de dosage (1) sont constituées d'éléments individuels (24) qui comprennent des moyens de convoyage, de préférence des rouleaux (25).

12. Appareil pour doser et mélanger selon la revendication 11, **caractérisé en ce que** des éléments (26) des trajectoires de déplacement sont agencés en rotation.

13. Appareil pour doser et mélanger selon la revendication 11, **caractérisé en ce que** des éléments (24, 26) des trajectoires de déplacement contiennent des dispositifs de pesage.

14. Appareil pour doser et mélanger selon l'une des revendications 1 à 13, **caractérisé en ce qu'**il est prévu un dispositif de transport, par exemple une grue (6) pour déplacer les récipients de dosage (1) ou pour positionner des récipients de reremplissage, agencé au-dessus des récipients de dosage (1).

15. Appareil pour doser et mélanger selon l'une des revendications 1 à 14, **caractérisé en ce que** les récipients de dosage (1) et/ou les récipients de charge (2) sont formés par un récipient (16) qui est agencé à l'intérieur d'un cadre (17).

16. Appareil pour doser et mélanger selon la revendication 15, **caractérisé en ce que** le récipient (16) est réalisé de manière à converger vers le bas à la manière d'un entonnoir.

17. Appareil pour doser et mélanger selon la revendication 15 ou 16, **caractérisé en ce que** les récipients (16) et les cadres (17) présentent un tracé de base rectangulaire.

18. Appareil pour doser et mélanger selon l'une des revendications 15 à 17, **caractérisé en ce qu'**il est prévu des ouvertures (18) à la face inférieure du cadre (17) pour recevoir les fourches d'un chariot à fourches.

19. Appareil pour doser et mélanger selon l'une des revendications 1 à 18, **caractérisé en ce que** les récipients de dosage (1) et/ou les récipients de charge (2) présentent à leur face supérieure des ouvertures (23) pour accrocher un moyen de levage.

20. Appareil pour doser et mélanger selon la revendication 19, **caractérisé en ce qu'**il est prévu quatre ouvertures d'accrochage (23) à chaque coin de la face supérieure du récipient de dosage (1) et/ou du récipient de charge (2).

21. Appareil pour doser et mélanger selon l'une des revendications 1 à 20, **caractérisé en ce que** les récipients de dosage (1) et les récipients de charge (2) présentent des dimensions extérieures identiques.

22. Appareil pour doser et mélanger selon l'une des revendications 1 à 21, **caractérisé en ce qu'**il est prévu un moyen de levage (9) pour lever les récipients de charge (2) et/ou les récipients de dosage (1).

23. Appareil pour doser et mélanger selon la revendication 22, **caractérisé en ce que** le moyen de levage (9) est capable de tourner sur 360°.

24. Appareil pour doser et mélanger selon l'une des revendications 1 à 23, **caractérisé en ce que** les récipients de charge (2) et les récipients de dosage (1) comprennent des moyens pour l'identification, par exemple des codes à barres.

25. Appareil pour doser et mélanger selon l'une des revendications 1 à 24, **caractérisé en ce que** les récipients de charge (2) et les récipients de dosage (1) présentent des interfaces pour la connexion avec un système de commande.

26. Appareil pour doser et mélanger selon l'une des revendications 1 à 25, **caractérisé en ce que** les récipients de charge (2) et les récipients de dosage (1) comprennent des moyens pour la jonction avec une alimentation de tension électrique, avec une source d'air comprimé, en particulier des jonctions à enfichage.

27. Appareil pour doser et mélanger selon l'une des revendications 1 à 26, **caractérisé en ce que** les récipients de charge (2) sont déplaçables le long d'une trajectoire fermée.

28. Appareil pour doser et mélanger selon l'une des revendications 1 à 27, **caractérisé en ce que** les récipients de dosage (1) comprennent à la face inférieure un clapet d'obturation et de dosage (27).

29. Appareil pour doser et mélanger selon la revendication 28, **caractérisé en ce que** les clapets d'obturation et de dosage (27) sont susceptibles d'être actionnés automatiquement.

30. Appareil pour doser et mélanger selon l'une des revendications 1 à 29, **caractérisé en ce qu'**un dispositif de pesage est contenu dans les récipients de dosage (1).

31. Appareil pour doser et mélanger selon l'une des revendications 1 à 30, **caractérisé en ce qu'**il est prévu dans les récipients de dosage (1) au moins un dispositif de dosage (12) pour un dosage grossier et au moins un dispositif de dosage (34) pour un dosage fin.

32. Appareil pour doser et mélanger selon la revendication 31, **caractérisé en ce que** les dispositifs de dosage (12, 34) sont formés par deux vis d'Archimède de tailles différentes.
